# EUROPEAN PATENT APPLICATION

(11) **EP 3 522 176 A1**
(43) Date of publication of application: **07.08.2019**
(21) Application number: 17856803.6
(22) Date of filing: 28.09.2017
(51) Int. Cl.: G21C 15/18, B65D 88/02, B65D 88/06, B65D 88/10

(54) **COOLING WATER RESERVOIR AND PASSIVE COOLING SYSTEM COMPRISING SAME FOR REACTOR CONTAINMENT BUILDING**

(30) Priority: 30.09.2016 KR 20160126869
(71) Applicant: Korea Hydro & Nuclear Power Co., Ltd, Gyeongju-si, Gyeongsangbuk-do 38120 (KR)
(72) Inventor: HEO, Sun, Daejeon 35355 (KR); HA, Hui Un, Daejeon 34082 (KR); LIM, Sang Gyu, Daejeon 34049 (KR); KIM, Dae Hun, Sejong 30098 (KR); KIM, Yun Goo, Daejeon 34094 (KR)
(74) Representative: Habermann, Hruschka & Schnabel
(86) International application number: PCT/KR2017/010876
(87) International publication number: WO 2018/062917

(57) **Abstract**

An object of the present invention is to provide a cooling water storage reservoir capable of passive cooling a reactor containment building in order to prevent the reactor containment building from being re-pressurized and reheated in the event of a serious accident. The cooling water storage reservoir comprises: a storage tank forming a first storage space in which cooling water is stored; a compartment tank disposed inside the storage tank and forming a second storage space separated from the first storage space; and an inlet which is provided in the compartment tank and allows the cooling water in the first storage space to naturally flow into the second storage space when the water level in the second storage space decreases.

## Description

### [Technical Field]

The present invention relates to a cooling water storage reservoir and a nuclear reactor building passive cooling system including the same, and more particularly, to a cooling water storage reservoir for cooling a nuclear reactor building and a nuclear reactor building passive cooling system including the same.

### [Background Art]

In general, in the event of a severe accident at a nuclear power plant, a radioactive material is discharged together with steam into the nuclear reactor building and thus a temperature and pressure in the nuclear reactor building rise sharply. In this case, when the rising temperature and pressure are not adjusted, the nuclear reactor building may be destroyed. Therefore, a nuclear reactor building cooling system is provided in the nuclear reactor building and thus in the event of a severe accident, the rising temperature and pressure may be adjusted.

However, in the event of a severe accident, it is difficult for an operator to access to control the cooling system, and there is a problem that the cooling system does not operate properly due to a problem such as a power loss. Therefore, a passive cooling system is applied. The passive cooling system may include a cooling water storage reservoir installed outside the nuclear reactor building and a heat exchanger extended from the cooling water storage reservoir into the nuclear reactor building.

Therefore, in the event of a severe accident, as the heat exchanger operates, the nuclear reactor building is cooled. Here, at the beginning of the accident, thermal energy is smoothly removed by a low temperature of cooling water. However, when a temperature of cooling water rises due to repeated heat exchange, thermal energy may not be completely removed and thus there is a problem that a temperature and pressure of the nuclear reactor building rise again.

### [Disclosure]

### [Technical Problem]

The present invention provides a cooling water storage reservoir for preventing a nuclear reactor building from being re-pressed and reheated while cooling the nuclear reactor building in the event of a severe accident and a nuclear reactor building passive cooling system including the same.

### [Technical Solution]

A cooling water storage reservoir capable of passively cooling a building includes: a storage tank forming a first storage space in which cooling water is stored; a compartment tank disposed inside the storage tank and forming a second storage space separated from the first storage space; and an inlet provided in the compartment tank and allowing the cooling water in the first storage space to naturally flow into the second storage space when a water level in the second storage space is decreased.

The reservoir may further include a heat exchanger which extends from the compartment tank to the building and cooling the building based on cooling water in the second storage space.

The compartment tank may be provided in an enclosure shape.

The compartment tank may be provided in a cylindrical shape.

A capacity of the second storage space may be smaller than a capacity of the first storage space.

The inlet may be provided as a plurality of inlets, and the plurality of inlets may be arranged at a same height.

Meanwhile, a nuclear reactor building passive cooling system according to the present invention is disposed adjacent to an outer wall of a nuclear reactor building to passively cool the nuclear reactor building and includes: a storage tank forming a first storage space in which cooling water is stored; a compartment tank disposed inside the storage tank and forming a second storage space separated from the first storage space; and an inlet provided in the compartment tank and allowing the cooling water in the first storage space to naturally flow into the second storage space when a water level in the second storage space is decreased.

The system may further include a heat exchanger extending from the compartment tank to the reactor containment building and configured to cool the reactor containment building based on cooling water in the second storage space.

The compartment tank may be provided in an enclosure shape.

The compartment tank may be provided in a cylindrical shape.

A capacity of the second storage space may be smaller than a capacity of the first storage space.

The inlet may be provided as a plurality of inlets, and the plurality of inlets may be arranged at a same height.

### [Advantageous Effects]

A cooling water storage reservoir and a nuclear reactor building passive cooling system including the same according to the present invention can quickly stabilize a performance of the nuclear reactor building passive cooling system, thereby preventing performance deterioration of the nuclear reactor building passive cooling system.

Further, a cooling water storage reservoir and a nuclear reactor building passive cooling system including the same according to the present invention can continuously reduce a pressure and temperature of the nuclear reactor building, thereby suppressing occurrence of a secondary accident such as destruction of the nuclear reactor building.

The technical effects of the present invention are not limited to the effects mentioned above, and other technical effects not mentioned can be clearly understood by those skilled in the art from the following description.

### [Description of Drawings]

FIG. 1 is a conceptual view schematically illustrating a nuclear reactor building passive cooling system according to the present embodiment;
FIG. 2 is a cross-sectional view illustrating a nuclear reactor building passive cooling system according to the present embodiment taken along line I-I' of FIG. 1;
FIG. 3 is a cross-sectional view schematically illustrating a cooling water storage reservoir of a nuclear reactor building passive cooling system according to the present embodiment;
FIG. 4 is a cross-sectional view illustrating a cooling water storage reservoir of a nuclear reactor building passive cooling system according to the present embodiment taken along line II-II' of FIG. 1;
FIG. 5 is a graph illustrating changes in an internal pressure and temperature of a nuclear reactor building according to use of a cooling water storage reservoir of a conventional passive cooling system;
FIG. 6 is a graph illustrating changes in an internal pressure and temperature of a nuclear reactor building according to use of a cooling water storage reservoir of a nuclear reactor building passive cooling system according to the present embodiment;
FIG. 7 is a flowchart illustrating an operation of a nuclear reactor building passive cooling system according to the present embodiment; and
FIG. 8 is a cross-sectional view illustrating a cooling water storage reservoir of a nuclear reactor building passive cooling system according to another embodiment.

### [Mode for Invention]

Hereinafter, an embodiment according to the present invention will be described in detail with reference to the attached drawings. However, it should be understood that the present embodiment is not limited to embodiments described hereinafter, but may be implemented in various forms, and the present embodiments enable to complete the disclosure of the present invention and are provided to know completely the scope of the invention to those skilled in the art. In the drawing, shapes of elements may be exaggeratingly expressed for better description, and like reference numerals designate like elements in the drawing.

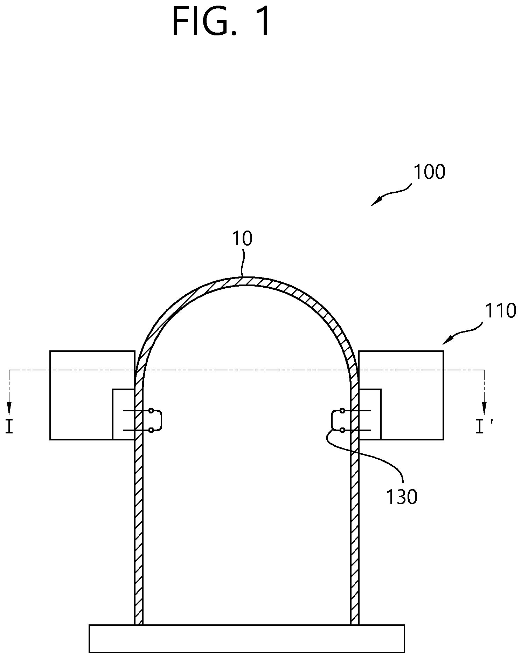

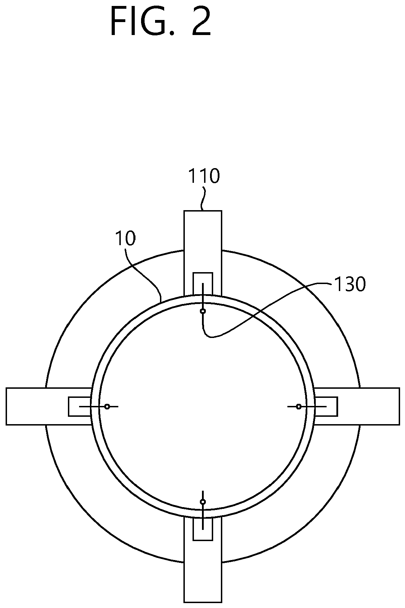

FIG. 1 is a conceptual view schematically illustrating a nuclear reactor building passive cooling system according to the present embodiment, and FIG. 2 is a cross-sectional view illustrating a nuclear reactor building passive cooling system according to the present embodiment taken along line I-I' of FIG. 1.

As shown in FIGS. 1 and 2, a nuclear reactor building passive cooling system 100 (hereinafter, referred to as a cooling system) according to the present embodiment includes a cooling water storage reservoir 110.

The cooling water storage reservoir 110 may be disposed in an upper area of an outer circumference of a nuclear reactor building 10. The cooling water storage reservoir 110 may supply cooling water to the inside of the nuclear reactor building 10, as needed, and in this case, even if main power of a reactor facility is shut off, the cooling water storage reservoir 110 may be disposed in an upper area of the nuclear reactor building 10 so as to supply cooling water by natural drop. However, when it is unnecessary to supply cooling water to the inside of the nuclear reactor building 10, a height of the cooling water storage reservoir 110 may be changed.

The cooling water storage reservoir 110 may be disposed in the plural, FIG. 2 illustrates an embodiment in which four cooling water storage reservoirs 110 are provided, and the number of the cooling water storage reservoirs 110 is not limited thereto.

A heat exchanger 130 is connected to the cooling water storage reservoir 110. One side of the heat exchanger 130 is disposed inside the cooling water storage reservoir 110 and the other side thereof is extended into the nuclear reactor building 10. For example, an outflow pipe 131 and an inflow pipe 133 of the heat exchanger 130 are extended to the cooling water storage reservoir 110, and a heat exchange unit 135 is disposed inside the nuclear reactor building 10. Therefore, in the event of a severe accident, the heat exchanger 130 enables the nuclear reactor building 10 to be cooled based on cooling water stored in the cooling water storage reservoir 110.

The cooling water stored in the cooling water storage reservoir 110 may be received while being partitioned in the cooling water storage reservoir 110. Hereinafter, the cooling water storage reservoir 110 according to the present embodiment will be described in detail with reference to the accompanying drawings. However, a detailed description of the above-described constituent elements is omitted and constituent elements identical to or corresponding to those according to the foregoing embodiment are denoted by the same reference numerals.

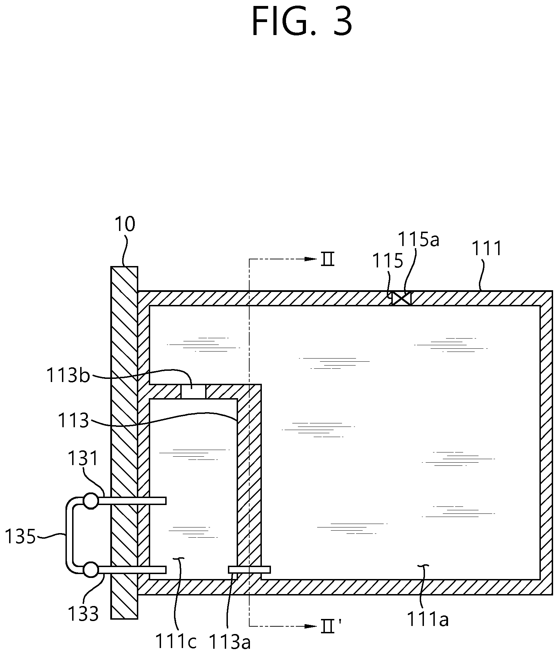

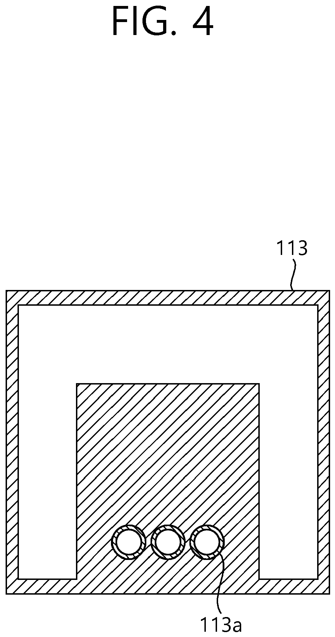

FIG. 3 is a cross-sectional view schematically illustrating a cooling water storage reservoir of a nuclear reactor building passive cooling system according to the present embodiment, and FIG. 4 is a cross-sectional view illustrating a cooling water storage reservoir of a nuclear reactor building passive cooling system according to the present embodiment taken along line II-II'.

As shown in FIGS. 3 and 4, the cooling water storage reservoir 110 according to the present embodiment includes a storage tank 111. The storage tank 111 may form an outer shape of the cooling water storage reservoir 110 and may be supported to an outer wall of the nuclear reactor building 10. Here, the storage tank 111 forms a space for receiving cooling water therein and may be provided in a substantially cubic shape, but a shape of the storage tank 111 is not limited thereto.

A partition unit is provided in the storage tank 111 to separate a cooling water storage space. The partition unit may be provided as a compartment tank 113. In the storage tank 111, the compartment tank 113 is disposed adjacent to the reactor containment building 10. As a result, a first storage space 111a and a second storage space 111c separated from the first storage space 111a are formed in the cooling water storage tank 110. In this case, the heat exchanger 130 is connected to the second storage space 111c. In addition, a capacity of the second storage space 111c may be set to be smaller than a capacity of the first storage space 111a. For example, the capacity of the second storage space 111c may be equal to or less than 50% of the total capacity of the storage tank 111.

In addition, a steam discharging port 115 is formed on an upper wall of the storage tank 111. The steam discharging port 115 allows steam generated in response to cooling of the reactor containment building 10 to be discharged to the outside. As a result, breakage or damage of the storage tank 111 due to variation of internal pressure may be prevented.

In addition, a filter 115a is mounted to the steam discharging port 115. The filter 115a prevents that harmful matters possibly flowing into the storage tank 111 from the inside of the reactor containment building 10 upon breakage or damage of the heat exchanger 130, for example, radioactive materials, leak to outdoor atmosphere.

Meanwhile, an inlet may be provided in a lower area of the compartment tank 113 to allow the first storage space 111a and the second storage space 111c to communicate with each other. Such an input may be provided as a connection pipe 113a. In this case, the connection pipe 113a may be provided as a plurality of connection pipes. However, when the connection pipes 113a is provided as a plurality of connection pipes, the plurality of connection pipes may be arranged at the same height in order to prevent cooling water from circulating by natural convection between the first storage space 111a and the second storage space 111c.

In addition, FIG. 4 shows an example in which three connection pipes 113a are provided, but the number of connection pipes 113a is not limited. In addition, the present embodiment describes that the connection pipe 113a is disposed in the compartment tank 113 so as to allow the first storage space 111a and the second storage space 111c to communicate with each other. However, a hole, except the connection pipe 113a, may be formed in the compartment tank 113, and the hole may be provided in any of various shapes including a circle and a slit.

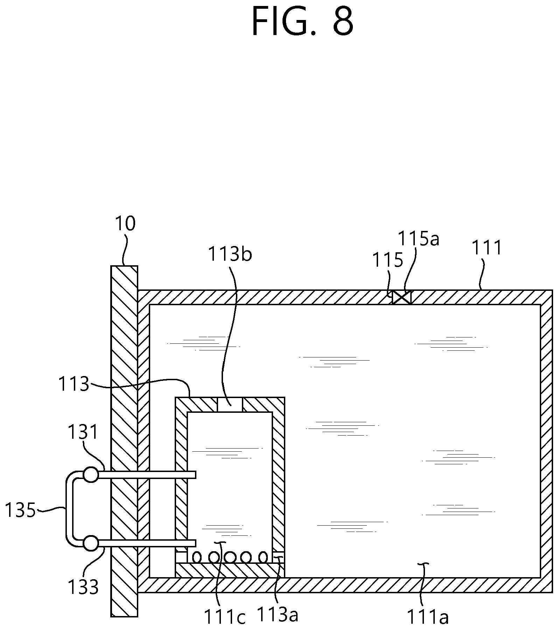

In addition, the present embodiment describes that the compartment tank 113 is provided in an enclosure shape. However, the compartment tank 113 may be provided in a cylindrical shape, as shown in FIG. 8, and the shape of the compartment tank 113 is not limited.

Meanwhile, the connection pipe 113a forms a path along which the cooling water stored in the first storage space 111a flows into the second storage space 111c.

More specifically, upon occurrence of a major accident, the second storage space 111c connected to the heat exchanger 130 may reach saturation temperature in a short period of time. As a result, this contributes stability of heat removing performance of the cooling system 100, so that temperature and pressure of the reactor containment building 10 is stabilized quickly. As described above, the capacity of the second storage space 111c is smaller than the capacity of the first storage space 111a for this purpose.

Afterward, if a refrigerant of high temperature is introduced along the inlet pipe 131, the second storage space 111c may reach the saturation temperature. In addition, cooling water of the first storage space 111a is introduced into the second storage space 111c by passing through the connection pipe 113a, and the refrigerant of high temperature and the cooling water introduced from the first storage space 111a circulates.

Accordingly, the cooling water storage reservoir 110 constantly maintains a heat removal performance of the cooling system 100 from the beginning of a severe accident to enable a pressure and temperature of the nuclear reactor building 10 to gradually reduce. Therefore, in a conventional cooling system, while a temperature and pressure of the nuclear reactor building 10 decrease, a heat removal performance decreases due to increase of the cooling water temperature and a problem can be solved that the pressure and temperature of the nuclear reactor building 10 is thus re-pressurized and reheated.

More specifically, the conventional cooling system and the cooling system 100 according to the present embodiment are compared as follows.

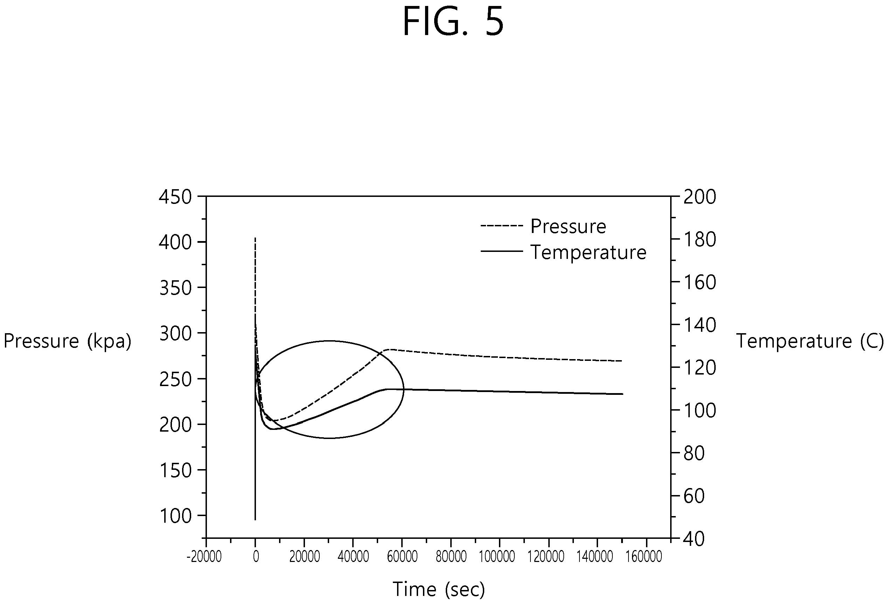

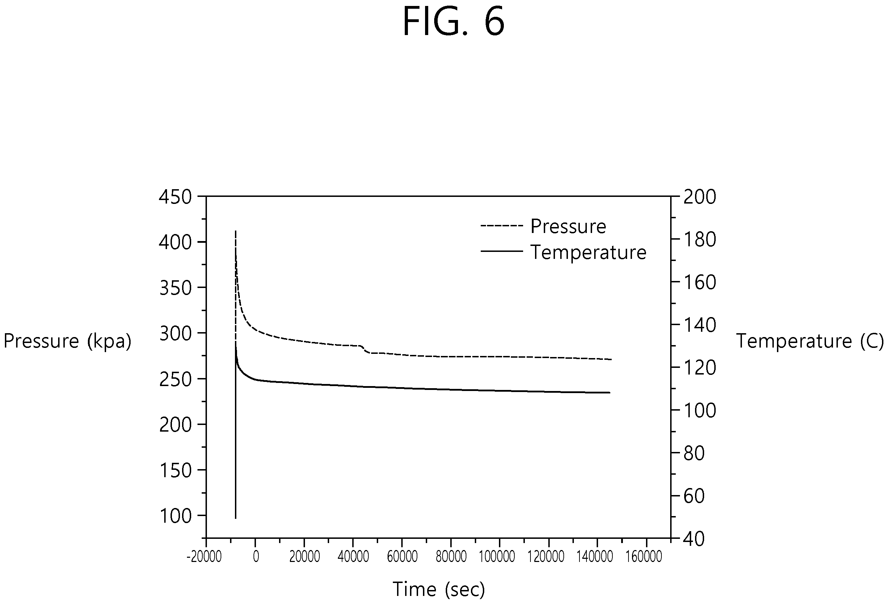

FIG. 5 is a graph illustrating changes in an internal pressure and temperature of a nuclear reactor building according to use of a cooling water storage reservoir of a conventional passive cooling system. FIG. 6 is a graph illustrating changes in an internal pressure and temperature of a nuclear reactor building according to use of a cooling water storage reservoir of a nuclear reactor building passive cooling system according to the present embodiment.

As shown in FIGS. 5 and 6, a conventional cooling system operates with temperature and pressure rise of the nuclear reactor building 10 in the event of a severe accident. In this case, the conventional cooling system may reduce a temperature and pressure of the nuclear reactor building 10.

However, in the conventional cooling system, after a predetermined time has lapsed, as cooling water is heated, efficiency of the cooling system is drastically lowered. As shown in a section "A" of FIG. 5, there is a problem that a temperature and pressure of the nuclear reactor building 10 increase again. Particularly, in such a process, the nuclear reactor building 10 may be broken or damaged due to stress applied to the nuclear reactor building 10.

However, in the cooling system 100 according to the present embodiment, when cooling water stored in the second storage space 111c is converted into steam, cooling water stored in the first storage space 111a is naturally introduced into the second storage space 111c. Therefore, as shown in FIG. 6, temperature and pressure of the reactor containment building 10 may be reduced smoothly upon a serious accident, thereby solving a problem that the temperature and pressure of the reactor containment building 10 are increased again. As a result, it is possible to prevent stress from being applied to the reactor containment building 10.

Hereinafter, an operation of a nuclear reactor building passive cooling system according to the present embodiment will be described in more detail. However, a detailed description of the above-described constituent elements is omitted and constituent elements identical to or corresponding to those according to the foregoing embodiment are denoted by the same reference numerals.

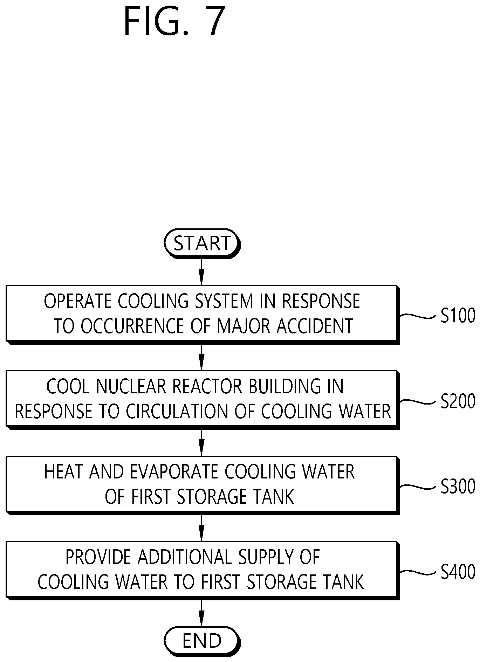

FIG. 7 is a flowchart illustrating an operation of a nuclear reactor building passive cooling system according to the present embodiment.

As shown in FIG. 7, the cooling system 100 according to the present embodiment may be operated in the event of a severe accident (S100). In this case, steam and radioactive materials are discharged from inside the nuclear reactor building 10, thereby increasing a temperature and pressure of an inner space of the nuclear reactor building 10.

Accordingly, cooling water in the heat exchanger 135 is heated, and the heated cooling water flows into the second storage space 111c. In this case, the cooling water stored in the second storage space 111c flows into the heat exchanger 130 to be provided to the heat exchange unit 135. As such, by allowing the cooling water to flow in and out, the cooling system 100 may circulate the cooling water based on a nature force (S200).

Meanwhile, as time passes after occurrence of a major accident, temperature of cooling water in the second storage space 111c is increased to a boiling point (S300). However, the cooling water stored in the first storage space 111a remains at an initial temperature without being mixed with the cooling water of the second storage space 111c.

In addition, a time period required for the cooling water in the second storage space 111c to reach the boiling point may be shorter than in an existing cooling water storage reservoir having the same capacity of the cooling water storage reservoir 110 according to the present embodiment. As a result, the cooling system 100 according to the present embodiment may be stabilized after a relatively short transition period.

In addition, as the cooling water of the second storage space 111c evaporates, low-temperature cooling water of the first storage space 111a may naturally flow into the second storage space 111c (S400). Accordingly, as heat removing performance of the cooling system 100 is degraded due to the increase in temperature of the cooling water stored in the second storage space 111c, it is possible to solve a problem that pressure and temperature of the reactor containment building 10 are increased again.

Therefore, a cooling water storage reservoir and a nuclear reactor building passive cooling system including the same can quickly stabilize a performance of the nuclear reactor building passive cooling system, thereby preventing performance deterioration of the nuclear reactor building passive cooling system.

Further, the cooling water storage reservoir and the nuclear reactor building passive cooling system including the same can continuously reduce a pressure and temperature of the nuclear reactor building, and thus a secondary accident such as destruction of the nuclear reactor building can be suppressed from occurring.

The embodiments of the present invention described above and shown in the drawings should not be construed as limiting the technical idea of the present invention. The scope of the present invention is limited only by the matters described in the claims, and those skilled in the art can modify the technical idea of the present invention in various forms. Accordingly, such improvements and modifications will fall within the scope of the present invention as long as they are obvious to those skilled in the art.

## Claims

1. A cooling water storage reservoir capable of passively cooling a building, the reservoir comprising:
a storage tank forming a first storage space in which cooling water is stored;
a compartment tank disposed inside the storage tank and forming a second storage space separated from the first storage space; and
an inlet provided in the compartment tank and allowing the cooling water in the first storage space to naturally flow into the second storage space when a water level in the second storage space is decreased.

2. The reservoir of claim 1, further comprising a heat exchanger extending from the compartment tank to the building and cooling the building based on cooling water in the second storage space.

3. The reservoir of claim 2, wherein the compartment tank is provided in an enclosure shape.

4. The reservoir of claim 2, wherein the compartment tank is provided in a cylindrical shape.

5. The reservoir of claim 1, wherein a capacity of the second storage space is smaller than a capacity of the first storage space.

6. The reservoir of claim 1,
wherein the inlet is provided as a plurality of inlets, and
wherein the plurality of inlets are arranged at a same height.

7. A nuclear reactor building passive cooling system disposed adjacent to an outer wall of a nuclear reactor building and capable of passively cooling the nuclear reactor building, the system comprising:
a storage tank forming a first storage space in which cooling water is stored;
a compartment tank disposed inside the storage tank and forming a second storage space separated from the first storage space; and
an inlet provided in the compartment tank and allowing the cooling water in the first storage space to naturally flow into the second storage space when a water level in the second storage space is decreased.

8. The system of claim 7, further comprising a heat exchanger extending from the compartment tank to the nuclear reactor building and cooling the nuclear reactor building based on cooling water in the second storage space.

9. The system of claim 8, wherein the compartment tank is provided in an enclosure shape.

10. The system of claim 8, wherein the compartment tank is provided in a cylindrical shape.

11. The system of claim 7, wherein a capacity of the second storage space is smaller than a capacity of the first storage space.

12. The system of claim 7,
wherein the inlet is provided as a plurality of inlets, and
wherein the plurality of inlets are arranged at a same height.
